# EUROPÄISCHE PATENTSCHRIFT

(11) **EP 2 616 644 B1**
(45) Veröffentlichungstag und Bekanntmachung des Hinweises auf die Patenterteilung: **01.06.2016**
(21) Anmeldenummer: 11740943.3
(22) Anmeldetag: 09.08.2011
(51) Int. Cl.: F01L 1/352, F16H 35/00

(54) **VORRICHTUNG ZUR PHASENVERSCHIEBUNG DES DREHWINKELS EINES ANTRIEBSRADES ZU EINEM ABTRIEBSRAD**
APPARATUS FOR SHIFTING THE PHASE OF THE ROTARY ANGLE OF A DRIVE GEAR WITH RESPECT TO A DRIVEN GEAR
DISPOSITIF DE DÉPHASAGE DE L'ANGLE DE ROTATION D'UN PIGNON D'ENTRÉE PAR RAPPORT À UN PIGNON DE SORTIE

(30) Priorität: 14.09.2010 DE 102010045258
(43) Veröffentlichungstag der Anmeldung: 24.07.2013
(73) Patentinhaber: Pierburg GmbH, 41460 Neuss (DE)
(72) Erfinder: TÖNNESMANN, Andres, 52066 Aachen (DE); BRUNETTI, Costantino, 58730 Fröndenberg (DE); KÖSTER, Andreas, 45149 Essen (DE); BREUER, Michael, 52152 Simmerath (DE); DISMON, Heinrich, 52538 Gangelt (DE)
(74) Vertreter: Patentanwälte ter Smitten Eberlein Rütten Partnerschaftsgesellschaft
(86) Internationale Anmeldenummer: PCT/EP2011/063679
(87) Internationale Veröffentlichungsnummer: WO 2012/034791

(56) Entgegenhaltungen:
- EP-A2- 0 143 368
- EP-A2- 2 113 641
- WO-A1-2005/103454
- WO-A2-2006/029434
- DE-U- 7 337 206
- JP-A- 11 153 008

## Beschreibung

Die Erfindung betrifft eine Vorrichtung zur Phasenverschiebung eines Drehwinkels eines Antriebsrades zu einem Abtriebsrad, mit einem Getriebe, welches zwei gegenüberliegende Planetengetriebe aufweist, die über einen gemeinsamen Planetenträger miteinander gekoppelt sind und jeweils ein Sonnenrad und ein Hohlrad aufweisen, und mit einem Aktuator zur Phasenverstellung.

Derartige Vorrichtungen sind insbesondere zur Phasenverschiebung zwischen einer Kurbelwelle und einer Nockenwelle eines Verbrennungsmotors bekannt. Die Phasenverschiebung dient zur variablen Ventilzeitsteuerung zur Verbesserung des Ladungswechselprozesses im Motor. Zur Phasenverschiebung der Nockenwelle sind beispielsweise Flügelzellen-Nockenversteller, Nockenwellenkettenversteller oder axial verschiebbare Verzahnungselemente bekannt. Als besonders vorteilhaft hat sich die Verwendung von elektrischen Phasenverstellern herausgestellt, welche mit einem Planetengetriebe arbeiten. Diese bieten die Möglichkeit einer stufenlosen Verstellung, so dass eine hohe Variabilität erreicht wird.

Insbesondere sollen die gewünschten Phasensteller eine möglichst geringe mittlere Leistungsaufnahme aufweisen. Dies wird dadurch erreicht, dass die mechanischen Verluste bei der Drehmomentübertragung von der Kurbelwelle zur Nockenwelle möglichst gering gehalten werden. Des Weiteren soll eine Leistungsaufnahme an der Stellvorrichtung nur in den Zeiten erfolgen, in denen auch tatsächlich eine Phasenverschiebung stattfindet. Bei Verwendung von als symmetrischen kinematischen Doppelumlaufgetrieben ausgebildeten Phasenstellern mit einem Übersetzungsverhältnis von 1:1 zwischen Antrieb und Abtrieb ist keine Synchronisation zwischen Antrieb und Abtrieb bei der Phasenverstellung notwendig.

Aus der WO 2005/103454 A1 ist ein Verstellgetriebe für eine Nockenwelle mit zwei gegenüberliegenden Planetengetrieben bekannt. Die Getriebe sind jeweils dadurch gekoppelt, dass ein Hohlrad des ersten Getriebes mit einem Planetenträger des anderen Getriebes verbunden ist. Beide Sonnenräder sind über eine Aktuator verdrehbar.

Ein Wellenkopplungssystem zur Phasenverschiebung eines Drehwinkels eines Antriebsrades zu einem Abtriebsrad, mit einem Getriebe, welches aus zwei miteinander gekoppelten gegenüberliegenden Planetengetrieben besteht, deren Kopplung über eine Verbindung der Planetenräder der beiden Planetengetriebe erfolgt, ist aus der EP 0 143 368 A2 bekannt. Beide Planetengetriebe weisen jeweils ein Sonnenrad, ein Hohlrad, und ein oder mehrere Planetenräder auf. Die Phasenverstellung erfolgt über einen Aktuator, der an einem der Hohlräder angreift.

Ein entsprechendes Getriebe ist auch aus der DE 73 37 206 U zum Verstellen der Phasenlage eines umlaufenden Steuerorgans gegenüber seiner Antriebswelle bekannt, welche aus zwei symmetrisch zueinander angeordneten Planetengetrieben besteht, welche über einen gemeinsamen Planetenträger bewegungsabhängig gekoppelt sind. Zur Phasenverstellung dient eine relative Drehung zwischen einem feststehenden Hohlrad und einem gegenüberliegendem relativ hierzu drehbarem Hohlrad. Dieser Phasensteller benötigt einen relativ geringen Bauraum, weist praktisch keine Axialkräfte auf und die Verstellmomente werden innerhalb des Getriebes abgefangen. Dieser Steller eignet sich jedoch nur bedingt zur Anwendung im Automobilbereich, wo eine sehr feinfühlige Möglichkeit zur Verstellung erforderlich ist. Desweiteren sind die aufzubringenden Verstellmomente relativ hoch. Auch besteht eine relativ schlechte Zugänglichkeit des Stellers zu dem Hohlrad, über welches die Phasenverstellung vorgenommen wird. Im Aufbau enthält dieses Getriebe sowohl relativ große Lager als auch verschiedene Durchdringungen.

Es stellt sich daher die Aufgabe, eine Vorrichtung zur Phasenverschiebung des Drehwinkels zwischen einem Antriebsrad und einem Abtriebsrad zu schaffen, mit der die genannten Nachteile vermieden werden können, die Leistungsaufnahme minimiert und die Kosten mittels eines möglichst einfachen mechanischen Aufbaus minimiert werden können.

Diese Aufgabe wird durch den kennzeichnenden Teil des Hauptanspruchs gelöst. Dadurch, dass ein erstes Hohlrad der zwei Hohlräder zumindest drehfest mit dem Antriebsrad verbunden ist, ein zweites Hohlrad der zwei Hohlräder als Abtriebsrad dient und ein erstes Sonnenrad der zwei Sonnenräder relativ zu einem zweiten Sonnenrad der zwei Sonnenräder über den Aktuator verdrehbar ist, wird eine hohe Untersetzung zwischen Verstellwinkel und Nockenwellenphasenwinkel erreicht, was zu einer feinfühligen Phasenverstellung mit geringen Verstellmomenten führt. Desweiteren besteht eine gute Zugänglichkeit der Anschlusswellen und des Sonnenrades zur Verstellung.

Vorzugsweise ist das erste, antriebsseitige Sonnenrad des ersten Planetengetriebes über den Aktuator bewegbar. Hierdurch ist die Anbindung des stillstehenden Sonnenrades an das Gehäuse des Aktuators ebenso einfach auszuführen wie die Anbindung des ersten Sonnenrades an die Aktuatorwelle.

In einer besonders günstigen Ausführungsform weist jedes Planetengetriebe drei gleichmäßig über den Umfang verteilte Planetenräder auf. Dies führt bei minimalem Bauteileaufwand zu einer besonders gleichmäßigen Verteilung der Momente im Getriebe.

Vorzugsweise sind die Planetengetriebe im Wesentlichen symmetrisch ausgebildet. Dies führt zu einer hohen Gleichteilquote und somit zu geringeren Kosten. Lediglich die Planetenräder sind zueinander verdreht angeordnet.

Vorteilhafterweise sind die Planetengetriebe vollständig auf einem Fortsatz einer Nockenwelle gelagert. Dies bedeutet, das besonders kleine Lager, insbesondere Nadellager verwendet werden können, wodurch die Montierbarkeit vereinfacht wird und wiederum Kosten gesenkt werden können.

Um eine lange Lebensdauer des Getriebes auf besonders einfache Art und Weise sicherzustellen, ist in dem Fortsatz der Nockenwelle eine Ölschmierungsbohrung ausgebildet, über welche eine fluidische Verbindung zu den Lagern der Planetengetriebe herstellbar ist, welche auf dem Umfang des Fortsatzes angeordnet sind.

In einer bevorzugten Ausführung ist das als Abtriebsrad dienende zweite Hohlrad über eine Trägerplatte formschlüssig oder stoffschlüssig mit der Nockenwelle verbunden. Eine derartige Anbindung ist aufgrund der guten Zugänglichkeit einfach herstellbar.

In einer vorteilhaften Ausführung weist das zweite Sonnenrad einen hohlzylinderförmigen Fortsatz auf, auf dem der Planetenträger gelagert ist und welches auf dem Fortsatz der Nockenwelle gelagert ist. Somit erfolgt eine zentrale Einleitung der Verstellkräfte, ohne dass Biegemomente von den Lagern aufgenommen werden müssen.

In einer hierzu weiterführenden Ausführungsform umgibt das erste Sonnenrad einen Abschnitt des hohlzylinderförmigen Fortsatzes des zweiten Sonnenrades. Dies minimiert den zum Anschluss des Aktuators notwendigen Bauraumes des Getriebes und vereinfacht die Anwendung des Aktuators.

In einer bevorzugten Ausführung ist das erste Hohlrad radial innerhalb des Antriebsrades angeordnet und fest mit dem Antriebsrad verbunden. Auch dies erleichtert die Montage.

Es wird somit eine Vorrichtung zur Phasenverstellung geschaffen, welche besonders kompakt ist und kostengünstig herstellbar und einfach montierbar ist. Mit dieser Vorrichtung wird gleichzeitig eine besonders feinfühlige Phasenverstellung ermöglicht, welche mit geringen aufzubringenden Drehmomenten durchführbar ist.

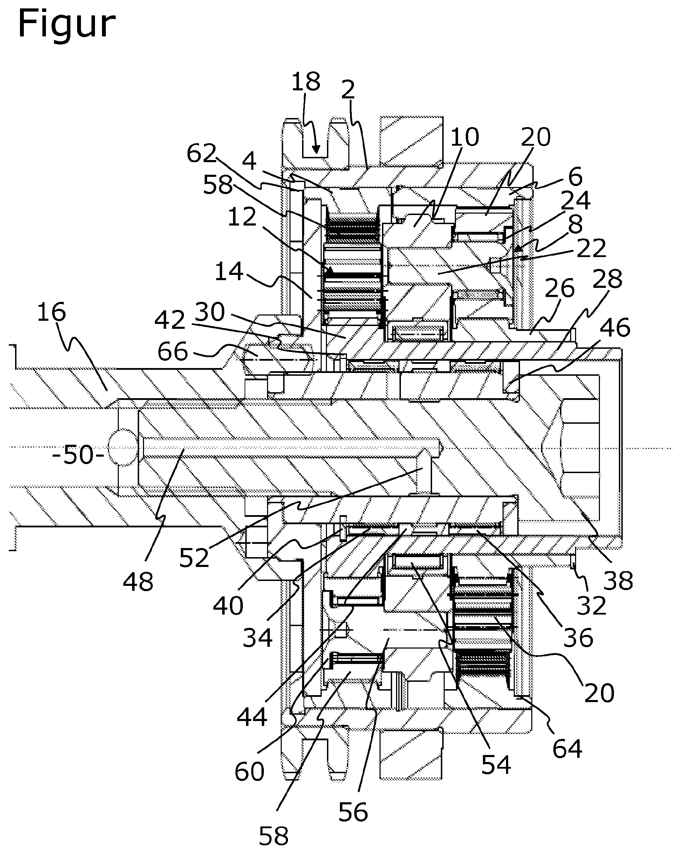

Ein Ausführungsbeispiel ist in der Figur dargestellt und wird nachfolgend beschrieben.

Die Figur zeigt eine Seitenansicht eines Getriebes einer erfindungsgemäßen Vorrichtung zur Phasenverschiebung in geschnittener Darstellung.

Die erfindungsgemäße Vorrichtung zur Phasenverschiebung des Drehwinkels eines Antriebsrades 2 zu einem Abtriebsrad 4 besteht aus einem fest mittels Presspassung mit dem Antriebsrad 2 verbundenen innenverzahnten Hohlrad 6 eines ersten Planetengetriebes 8, welches wiederum über einen Planetenträger 10 mit einem zweiten Planetengetriebe 12 gekoppelt ist, dessen abtriebsseitiges innenverzahntes Hohlrad, welches als Abtriebsrad 4 dient drehfest über eine Trägerplatte 14 mit einer Nockenwelle 16 verbunden ist. Das Hohlrad 6 kann auch einstückig mit dem Antriebsrad 2 hergestellt werden.

Das Antriebsrad 2 weist eine Führung oder Verzahnung 18 für einen Antriebsriemen oder eine Antriebskette auf, über den die Vorrichtung mit einer nicht dargestellten Kurbelwelle bewegungsabhängig, üblicherweise im Verhältnis 2:1, gekoppelt ist.

Die Innenverzahnung des Hohlrades 6 greift in die Außenverzahnungen dreier Planetenräder 20, die drehbar auf Achsstiften 22 gelagert sind, welche wiederum fest im Planetenträger 10 befestigt sind. Zur axialen Sicherung der Planetenräder 20 weisen die Achsstifte 22 an ihren Enden Erweiterungen 24 auf, während die axiale Bewegung der Planetenräder an der gegenüberliegenden Seite durch den Planetenträger 10 begrenzt wird.

Die Planetenräder 20 kämmen an ihren jeweiligen radial entgegengesetzten Seiten in bekannter Weise mit einem Sonnenrad 26, welches in vorliegender Ausführung mit einem nicht dargestellten Aktuator gekoppelt ist, über welchen dieses Sonnenrad 26 in Drehung versetzt werden kann.

Das erste Sonnenrad 26 umgibt radial einen Abschnitt eines Fortsatzes 28 eines zweiten Sonnenrades 30 des zweiten Planetengetriebes 12. Der Fortsatz 28 erstreckt sich vom Sonnenrad 30, welches an der axial zum ersten Sonnenrad 26 gegenüberliegenden Seite des Planetenträgers 10 angeordnet, über das axiale Ende des ersten Sonnenrades 26 hinaus zum nicht dargestellten Aktuator, dessen Gehäuse fest mit diesem Ende verbunden ist, wodurch eine Drehung des zweiten Sonnenrades 30 vermieden wird. Unmittelbar hinter dem axialen Ende des ersten Sonnenrades 26 befindet sich eine Nut am Außenumfang des Fortsatzes, in der ein Sicherungsring 32 angeordnet ist, über den eine axiale Bewegung des ersten Sonnenrades 26 relativ zum zweiten Sonnenrad 30 verhindert wird.

Der Fortsatz 28 dient gleichzeitig als Lagerhülse für die beiden Getriebe 8, 12. Radial innerhalb des Fortsatzes 28 sind zwei Nadellager 34, 36 angeordnet, deren Innenringe auf einem Fortsatz 38 der Nockenwelle 16 befestigt sind, so dass diese im Innern des Fortsatzes 28 drehbar ist. Die axiale Sicherung der beiden Nadellager 34, 36 erfolgt über einen Sprengring 40 am ersten axialen Ende des ersten Nadellagers 34, der in einer Nut 42 des zweiten Sonnenrades 30 befestigt ist, einer zwischen den Lagern 34, 36 angeordneten Abstandshülse 44 sowie einem am entgegengesetzten axialen Ende der Lagereinheit angeordneten Sicherungsring 46, der in einer Nut des Fortsatzes 38 der Nockenwelle 16 angeordnet ist. Dieser Fortsatz 38 weist des Weiteren eine Ölschmierungsbohrung 48, über welche eine fluidische Verbindung zwischen der Ölbohrung 50 der Nockenwelle 16 und, über eine Querbohrung 52, den Lagern 34, 36 hergestellt wird.

Auf dem Außenumfang des Fortsatzes 28 ist des Weiteren ein Lager 54 zur Lagerung des Planetenträgers 10 angeordnet, an dem jeweils in Umfangsrichtung versetzt zu den ersten drei Achsstiften 22 und axial zur entgegengesetzten Richtung weisend, drei weitere Achsstifte 56 befestigt sind, auf denen wiederum drehbar drei weitere Planetenräder 58 gelagert sind. Die Achsstifte 56 weisen auch hier zur axialen Sicherung der Planetenräder 58 Erweiterungen 60 auf. Die zweiten drei Planetenräder 58, die wie die ersten drei Planetenräder 20 gleichmäßig auf einer Umfangslinie des Planetenträgers 10 verteilt gelagert sind, kämmen wiederum mit dem feststehenden zweiten Sonnenrad 30. An ihrer radial entgegengesetzten Seite kämmen die Planetenräder 58 mit dem zweiten Hohlrad, welches als Abtriebsrad 4 dient und die Nockenwelle 16 antreibt.

Um die beiden Planetengetriebe 8, 12 im Innern des Antriebsrades zu sichern, sind zwei weitere Sicherungsringe 62, 64 in Nuten an den beiden axialen Enden des Antriebsrades 2 beziehungsweise des damit fest verbundenen Hohlrades 6 angeordnet.

Der Kraftfluss der Vorrichtung erfolgt vom Antriebszahnrad 2, welches über die Kette oder den Riemen in Drehung versetzt wird, zum Hohlrad 6, welches sich mit gleicher Geschwindigkeit dreht. Durch die Drehung des Hohlrades 6 werden die Planetenräder 20 auf dem stillstehenden ersten Sonnenrad 26 abgerollt. Hierdurch wird über die Achsen 22 der Planetenträger 10 auf dem Lager 54 gedreht, der wiederum über die Achsen 56 die zweiten drei Planetenräder 58 antreibt. Diese rollen wiederum auf dem stillstehenden Sonnenrad 30 ab, wodurch das zweite Hohlrad 4 in Drehung versetzt wird und zwar aufgrund der vorhandenen Symmetrie mit der gleichen Winkelgeschwindigkeit wie das Antriebsrad 2. Die Drehung des Hohlrades 4 wird durch die feste Verbindung auf die Trägerplatte 14 und im Folgenden durch eine drehfeste Verbindung mittels Stiften 66 auf die Nockenwelle 16 übertragen, die sich mit der gleichen Umdrehungszahl dreht wie das Antriebsrad 2. Der mit der Nockenwelle verbundene Fortsatz 38 wird dadurch auch in dem Fortsatz 28 gedreht, so dass eine Schmierung der Lager 34, 36 sichergestellt wird.

Soll nun eine Phasenverschiebung zwischen dem Antriebsrad 2 und dem Abtriebsrad 4 beziehungsweise der Nockenwelle 16 erreicht werden, wird das erste Sonnenrad 26 zum zweiten Sonnenrad 30 mittels des Aktuators gedreht. Bei Drehung entgegen der Drehrichtung des Hohlrades 6 wird die Drehung der Planetenräder 20 verlangsamt, so dass das Abtriebsrad 4 während dieses Zeitraumes langsamer gedreht wird als das Antriebsrad 2. Dies führt zu einer Phasenverschiebung. Diese erfolgt bei Drehung in gleicher Richtung wie die Antriebsdrehrichtung des Antriebsrades 2 in entgegengesetzter Richtung.

Die beschriebene Ausführungsform ermöglicht eine sehr feinfühlige kontinuierliche Phasenverschiebung bei minimierten Antriebskräften. Es zeigt sich ein kostengünstiger und sehr einfach zu montierender Aufbau, insbesondere aufgrund dessen, dass lediglich kleine Lager von der Größe des Nockenwellenfortsatzes benötigt werden.

Es sollte deutlich sein, dass verschiedene konstruktive Modifikationen im Vergleich zu den beschriebenen Ausführungsformen möglich sind, ohne den Schutzbereich des Hauptanspruchs zu verlassen. So können beispielsweise statt der drei Übertragungszahnräder fünf verwendet werden, oder bei ausreichender Festigkeit auch nur ein einzelnes. Desweiteren ist es frei wählbar, welches der Sonnenräder antreibbar ausgestaltet wird. Selbstverständlich können auch andere Lagerungen verwendet werden. Die Art des Aktuators ist weitestgehend frei wählbar.

## Patentansprüche

1. Vorrichtung zur Phasenverschiebung eines Drehwinkels eines Antriebsrades (2) zu einem Abtriebsrad (4), mit
einem Getriebe, welches zwei gegenüberliegende Planetengetriebe (8, 12) aufweist, die über einen gemeinsamen Planetenträger (10) miteinander gekoppelt sind und jeweils ein Sonnenrad (26, 30) und ein Hohlrad (6, 4) aufweisen,
und mit einem Aktuator zur Phasenverstellung,
**dadurch gekennzeichnet, dass**
ein erstes Hohlrad (6) der zwei Hohlräder zumindest drehfest mit dem Antriebsrad (2) verbunden ist,
ein zweites Hohlrad der zwei Hohlräder als Abtriebsrad (4) dient
und ein erstes Sonnenrad (26) der zwei Sonnenräder relativ zu einem zweiten Sonnenrad (30) der zwei Sonnenräder über den Aktuator verdrehbar ist.

2. Vorrichtung zur Phasenverschiebung des Drehwinkels eines Antriebsrades zu einem Abtriebsrad nach Anspruch 1,
**dadurch gekennzeichnet, dass**
das erste, antriebsseitige Sonnenrad (26) über den Aktuator bewegbar ist.

3. Vorrichtung zur Phasenverschiebung des Drehwinkels eines Antriebsrades zu einem Abtriebsrad nach einem der Ansprüche 1 oder 2,
**dadurch gekennzeichnet, dass**
jedes Planetengetriebe (8, 12) drei gleichmäßig über den Umfang verteilte Planetenräder (20, 58) aufweist.

4. Vorrichtung zur Phasenverschiebung des Drehwinkels eines Antriebsrades zu einem Abtriebsrad nach einem der vorhergehenden Ansprüche,
**dadurch gekennzeichnet, dass**
die Planetengetriebe (8, 12) im Wesentlichen symmetrisch ausgebildet sind.

5. Vorrichtung zur Phasenverschiebung des Drehwinkels eines Antriebsrades zu einem Abtriebsrad nach einem der vorhergehenden Ansprüche,
**dadurch gekennzeichnet, dass**
die beiden Planetengetriebe (8, 12) auf einem Fortsatz (38) einer Nockenwelle (16) gelagert sind.

6. Vorrichtung zur Phasenverschiebung des Drehwinkels eines Antriebsrades zu einem Abtriebsrad nach einem Anspruch 5,
**dadurch gekennzeichnet, dass**
in dem Fortsatz (38) der Nockenwelle (16) eine Ölschmierungsbohrung (48, 52) ausgebildet ist, über welche eine fluidische Verbindung zu den Lagern (34, 36) der Planetengetriebe (8, 12) herstellbar ist, welche auf dem Umfang des Fortsatzes (38) angeordnet sind.

7. Vorrichtung zur Phasenverschiebung des Drehwinkels eines Antriebsrades zu einem Abtriebsrad nach einem der vorhergehenden Ansprüche,
**dadurch gekennzeichnet, dass**
das als Abtriebsrad (4) dienende zweite Hohlrad über eine Trägerplatte (14) formschlüssig oder stoffschlüssig mit der Nockenwelle (16) verbunden ist.

8. Vorrichtung zur Phasenverschiebung des Drehwinkels eines Antriebsrades zu einem Abtriebsrad nach einem der vorhergehenden Ansprüche,
**dadurch gekennzeichnet, dass**
das zweite Sonnenrad (30) einen hohlzylinderförmigen Fortsatz (28) aufweist, auf dem der Planetenträger (10) gelagert ist und welches auf dem Fortsatz (38) der Nockenwelle (16) gelagert ist.

9. Vorrichtung zur Phasenverschiebung des Drehwinkels eines Antriebsrades zu einem Abtriebsrad nach Anspruch 8,
**dadurch gekennzeichnet, dass**
das erste Sonnenrad (26) einen axialen Abschnitt des hohlzylinderförmigen Fortsatzes (28) des zweiten Sonnenrades (30) umgibt.

10. Vorrichtung zur Phasenverschiebung des Drehwinkels eines Antriebsrades zu einem Abtriebsrad nach einem der vorhergehenden Ansprüche
**dadurch gekennzeichnet, dass**
das erste Hohlrad (6) radial innerhalb des Antriebsrades (2) angeordnet ist und fest mit dem Antriebsrad (2) verbunden ist.

## Claims

1. Apparatus for shifting the phase of the rotary angle of a drive gear (2) with respect to a driven gear (4), comprising
a transmission having two opposite planetary gearings (8, 12) coupled with each other via a common planetary carrier (10) and each having a sun wheel (26, 30) and a ring gear (6, 4),
and comprising an actuator for phase adjustment,
**characterized in that**
a first hollow gear (6) of the two hollow gears is connected with the drive gear (2) at least for rotation therewith,
a second hollow gear of the two hollow gears serves as the driven wheel (4),
and a first sun wheel (26) of the two sun wheels is adapted to be turned relative to a second sun wheel (30) of the two sun wheels by means of the actuator.

2. Apparatus for shifting the phase of the rotary angle of a drive gear with respect to a driven gear as defined in claim 1, **characterized in that** the first, drive-side sun wheel (26) is movable by means of the actuator.

3. Apparatus for shifting the phase of the rotary angle of a drive gear with respect to a driven gear as defined in one of claims 1 or 2, **characterized in that** each planetary gearing (8, 12) has three planetary gears (20, 58) equally distributed over the circumference.

4. Apparatus for shifting the phase of the rotary angle of a drive gear with respect to a driven gear as defined in one of the preceding claims, **characterized in that** the planetary gearings (8, 12) are designed to be substantially symmetrical.

5. Apparatus for shifting the phase of the rotary angle of a drive gear with respect to a driven gear as defined in one of the preceding claims, **characterized in that** the two planetary gearings (8, 12) are supported on a stub (38) of a camshaft (16).

6. Apparatus for shifting the phase of the rotary angle of a drive gear with respect to a driven gear as defined in claim 5, **characterized in that** an oil lubrication bore (48, 52) is formed in the stub (38) of the camshaft (16), via which bore fluid communication can be established with the bearings (34, 36) of the planetary gears (8, 12) arranged on the circumference of the stub (38).

7. Apparatus for shifting the phase of the rotary angle of a drive gear with respect to a driven gear as defined in one of the preceding claims, **characterized in that** the second hollow gear serving as the driven gear (4) is connected in a positive or material bonding manner with the camshaft (16) via a carrier plate (14).

8. Apparatus for shifting the phase of the rotary angle of a drive gear with respect to a driven gear as defined in one of the preceding claims, **characterized in that** the second sun wheel (30) has a hollow cylindrical stub on which the planetary carrier (10) is supported and which is supported on the stub (38) of the camshaft (16).

9. Apparatus for shifting the phase of the rotary angle of a drive gear with respect to a driven gear as defined in claim 8, **characterized in that** the first sun wheel (26) surrounds an axial section of the hollow cylindrical stub (28) of the second sun wheel (30).

10. Apparatus for shifting the phase of the rotary angle of a drive gear with respect to a driven gear as defined in one of the preceding claims, **characterized in that** the first hollow gear (6) is arranged radially inside the drive gear (2) and is fixedly connected with the drive gear (2).

## Revendications

1. Dispositif de déphasage de l'angle de rotation d'un pignon d'entrée (2) par rapport à un pignon de sortie (4), avec
un engrenage avec deux engrenages planétaires (8, 12) opposés, qui sont couplés l'un à l'autre par un porte-planétaire (10) commun et chacun comprend une roue solaire (26, 30) et une couronne (6, 4),
et avec un actionneur pour l'ajustage de la phase,
**caractérisé en ce que**
une première couronne (6) des deux couronnes est reliée au moins de manière solidaire en rotation au pignon d'entrée (2),
une deuxième couronne des deux couronnes agit comme pignon de sortie (4),
et une première roue solaire (26) des deux roues solaires peut être tournée par rapport à une deuxième roue solaire (30) des deux roues solaires au moyen de l'actionneur.

2. Dispositif de déphasage de l'angle de rotation d'un pignon d'entrée par rapport à un pignon de sortie selon la revendication 1, **caractérisé en ce que** la première roue solaire (26), côté d'entrée, peut être déplacée au moyen de l'actionneur.

3. Dispositif de déphasage de l'angle de rotation d'un pignon d'entrée par rapport à un pignon de sortie selon l'une des revendications 1 ou 2, **caractérisé en ce que** chaque engrenage planétaire (8, 12) comporte trois roues planétaires (20, 58) reparties régulièrement sur la circonférence.

4. Dispositif de déphasage de l'angle de rotation d'un pignon d'entrée par rapport à un pignon de sortie selon l'une quelconque des revendications précédentes, **caractérisé en ce que** les engrenages planétaires (8, 12) sont sensiblement symétriques.

5. Dispositif de déphasage de l'angle de rotation d'un pignon d'entrée par rapport à un pignon de sortie selon l'une quelconque des revendications précédentes, **caractérisé en ce que** les deux engrenages planétaires (8, 12) sont supportés sur un prolongement (38) d'un arbre à cames (16).

6. Dispositif de déphasage de l'angle de rotation d'un pignon d'entrée par rapport à un pignon de sortie selon la revendication 5, **caractérisé en ce que** le prolongement (38) de l'arbre à cames (16) est formé avec un trou de lubrification à l'huile (48, 52) par lequel on peut établir une liaison fluidique avec les paliers (34, 36) des engrenages planétaires (8, 12) qui sont disposés sur la circonférence du prolongement (38).

7. Dispositif de déphasage de l'angle de rotation d'un pignon d'entrée par rapport à un pignon de sortie selon l'une quelconque des revendications précédentes, **caractérisé en ce que** la deuxième couronne agissant comme roue de sortie (4) est reliée à l'arbre à cames (16) par forme ou par adhérence au moyen d'une plaque-porteuse (14).

8. Dispositif de déphasage de l'angle de rotation d'un pignon d'entrée par rapport à un pignon de sortie selon l'une quelconque des revendications précédentes, **caractérisé en ce que** la deuxième roue solaire (30) comprend un prolongement (28) en cylindre creux sur lequel le porte-planétaire (10) est supporté et qui est supporté sur le prolongement (38) de l'arbre à cames (16).

9. Dispositif de déphasage de l'angle de rotation d'un pignon d'entrée par rapport à un pignon de sortie selon la revendication 8, **caractérisé en ce que** la première roue solaire (26) entoure une partie axiale du prolongement (28) en cylindre creux de la deuxième roue solaire (30).

10. Dispositif de déphasage de l'angle de rotation d'un pignon d'entrée par rapport à un pignon de sortie selon l'une quelconque des revendications précédentes, **caractérisé en ce que** ladite première couronne (6) est disposée radialement à l'intérieur de la roue d'entrée (7) et est solidaire à la roue d'entrée (2).
